# EUROPEAN PATENT SPECIFICATION

(11) **EP 2 929 068 B1**
(45) Date of publication and mention of the grant of the patent: **25.10.2017**
(21) Application number: 13860290.9
(22) Date of filing: 15.03.2013
(51) Int. Cl.: C02F 1/469, C25B 9/08, C02F 103/08

(54) **ELECTROCHEMICAL SEPARATION SYSTEMS AND METHODS**
ELEKTROCHEMISCHE TRENNSYSTEME UND VERFAHREN
SYSTÈMES ET PROCÉDÉS DE SÉPARATION ÉLECTROCHIMIQUE

(30) Priority: 05.12.2012 US 201261733618 P
(43) Date of publication of application: 14.10.2015
(73) Proprietor: Evoqua Water Technologies LLC, PA 15086 (US)
(72) Inventor: GU, George Y., Andover, New Jersey 01810 (US)
(74) Representative: Murgitroyd & Company
(86) International application number: PCT/US2013/031945
(87) International publication number: WO 2014/088628

(56) References cited:
- WO-A1-2011/025867
- US-A- 3 933 610
- US-A- 4 956 071
- US-A1- 2011 120 886
- US-A1- 2011 210 077
- US-A1- 2011 284 376
- US-B2- 6 824 662
- US-B2- 6 824 662
- US-B2- 6 929 748

## Description

### FIELD OF THE DISCLOSURE

Aspects relate generally to electrochemical separation and, more particularly, to electrochemical separation systems and methods including membranes having different performance characteristics for improved efficiency.

### SUMMARY

In accordance with one or more aspects, a water treatment system comprises a feed inlet fluidly connected to a source of water to be treated; a first electrochemical separation module in fluid communication with the feed inlet, the first electrochemical separation module including at least one ion exchange membrane having a first set of performance characteristics; a second electrochemical separation module fluidly connected to a diluted stream from the first electrochemical separation module, the second electrochemical separation module including a least one ion exchange membrane having a second set of performance characteristics that is different than the first set of performance characteristics; and a product outlet fluidly connected to a diluted stream from the second electrochemical separation module, wherein the at least one ion exchange membrane of the first electrochemical separation module has a lower electrical resistance, a lower permselectivity, and a higher water loss coefficient than the at least one ion exchange membrane of the second electrochemical separation module.

In accordance with one or more aspects, a method of treating water comprises introducing water having a first concentration of dissolved solids to an inlet of a first electrochemical separation module of the aforementioned water treatment system to form a process stream having a second concentration of dissolved solids, the first electrochemical separation module including at least one ion exchange membrane having a first set of performance characteristics; introducing the process stream having the second concentration of dissolved solids to a second electrochemical separation module of said water treatment system to form treated water, the second electrochemical separation module including at least one ion exchange membrane having a second set of performance characteristics that is different than the first set of performance characteristics; and collecting the treated water at an outlet of the second electrochemical separation module. Still other aspects, embodiments, and advantages of these aspects and embodiments, are discussed in detail below.

### BRIEF DESCRIPTION OF THE DRAWINGS

Various aspects of at least one embodiment are discussed below with reference to the accompanying figures, which are not intended to be drawn to scale. The figures are included to provide illustration and a further understanding of the various aspects and embodiments, and are incorporated in and constitute a part of this specification, but are not intended as a definition of the limits of the invention. Where technical features in the figures, detailed description or any claim are followed by references signs, the reference signs have been included for the sole purpose of increasing the intelligibility of the figures and description. In the figures, each identical or nearly identical component that is illustrated in various figures is represented by a like numeral. For purposes of clarity, not every component may be labeled in every figure. In the figures:
FIG. 1 presents a schematic of a process flow diagram in accordance with one or more embodiments; and
FIG. 2 presents data discussed in an accompanying Example in accordance with one or more embodiments.

### DETAILED DESCRIPTION

A staged or modular approach to electrochemical separation may improve various treatment processes, including desalination of seawater. Various stages or modules of the system include membranes having more than two different performance characteristics as discussed herein. Membranes having specific performance characteristics may be strategically positioned within an electrochemical separation system to improve overall process efficiency.

Devices for purifying fluids using electrical fields are commonly used to treat water and other liquids containing dissolved ionic species. Two types of devices that treat water in this way are electrodeionization and electrodialysis devices. Within these devices are concentrating and diluting compartments separated by ion-selective membranes. An electrodialysis device typically includes alternating electroactive semipermeable anion and cation exchange membranes. Spaces between the membranes are configured to create liquid flow compartments with inlets and outlets. An applied electric field imposed via electrodes causes dissolved ions with opposite charges, attracted to their respective counter-electrodes, to migrate through the anion and cation exchange membranes. This generally results in the liquid of the diluting compartment being depleted of ions, and the liquid in the concentrating compartment being enriched with the transferred ions

US3933610A discloses the desalination of an aqueous solution by means of multistage electrodialysis using membranes of different permselectivity coefficients.

Electrodeionization (EDI) is a process that removes, or at least reduces, one or more ionized or ionizable species from water using electrically active media and an electric potential to influence ion transport. The electrically active media typically serves to alternately collect and discharge ionic and/or ionizable species and, in some cases, to facilitate the transport of ions, which may be continuously, by ionic or electronic substitution mechanisms. EDI devices can comprise electrochemically active media of permanent or temporary charge, and may be operated batch-wise, intermittently, continuously, and/or even in reversing polarity modes. EDI devices may be operated to promote one or more electrochemical reactions specifically designed to achieve or enhance performance. Further, such electrochemical devices may comprise electrically active membranes, such as semipermeable or selectively permeable ion exchange or bipolar membranes. Continuous electrodeionization (CEDI) devices are EDI devices known to those skilled in the art that operate in a manner in which water purification can proceed continuously, while ion exchange material is continuously recharged. CEDI techniques can include processes such as continuous deionization, filled cell electrodialysis, or electrodiaresis. Under controlled voltage and salinity conditions, in CEDI systems, water molecules can be split to generate hydrogen or hydronium ions or species and hydroxide or hydroxyl ions or species that can regenerate ion exchange media in the device and thus facilitate the release of the trapped species therefrom. In this manner, a water stream to be treated can be continuously purified without requiring chemical recharging of ion exchange resin.

Electrodialysis (ED) devices operate on a similar principle as CEDI, except that ED devices typically do not contain electroactive media between the membranes. Because of the lack of electroactive media, the operation of ED may be hindered on feed waters of low salinity because of elevated electrical resistance. Also, because the operation of ED on high salinity feed waters can result in elevated electrical current consumption, ED apparatus have heretofore been most effectively used on source waters of intermediate salinity. In ED based systems, because there is no electroactive media, splitting water is inefficient and operating in such a regime is generally avoided.

In CEDI and ED devices, a plurality of adjacent cells or compartments are typically separated by selectively permeable membranes that allow the passage of either positively or negatively charged species, but typically not both. Dilution or depletion compartments are typically interspaced with concentrating or concentration compartments in such devices. In some embodiments, a cell pair may refer to a pair of adjacent concentrating and diluting compartments. As water flows through the depletion compartments, ionic and other charged species are typically drawn into concentrating compartments under the influence of an electric field resulting in ion current flux, such as a DC field or DC current. Positively charged species are drawn toward a cathode, typically located at one end of a stack of multiple depletion and concentration compartments, and negatively charged species are likewise drawn toward an anode of such devices, typically located at the opposite end of the stack of compartments. The electrodes are typically housed in electrolyte compartments that are usually partially isolated from fluid communication with the depletion and/or concentration compartments. Once in a concentration compartment, charged species migrating by the driving force of the electrodes are typically trapped by a barrier of selectively permeable membrane at least partially defining the concentration compartment. For example, anions are typically prevented from migrating further toward the cathode, out of the concentration compartment, by a cation selective membrane. Once captured in the concentrating compartment, charged species are removed or separated from the depleted product stream.

In CEDI and ED devices, the DC field is typically applied to the cells from a source of voltage and electric current applied to the electrodes (anode or positive electrode, and cathode or negative electrode). The voltage and current source (collectively "power supply") can be itself powered by a variety of means such as an AC power source, or for example, a power source derived from solar, wind, or wave power. At the electrode/liquid interface, an electrochemical reaction occurs resulting in an electron injection or donation from the species at the anode and cathode surface respectively. Particles having the opposite charge move to neutralize the charges created at the electrode surface due to this mechanism. The specific electrochemical reactions that occur at the electrode/interfaces can be controlled to some extent by the concentration of salts in the specialized compartments that house the electrode assemblies. For example, a feed to the anode electrolyte compartments that is high in sodium chloride will tend to generate chlorine and oxygen gases by similar electrochemical mechanisms, while such a feed to the cathode electrolyte compartment will tend to generate hydrogen gas and hydroxide ion. Generally, the hydrogen ion generated at the anode compartment will associate with a free anion, such as chloride ion, migrated from an adjacent depleted compartment to preserve charge neutrality and create hydrochloric acid solution, and analogously, the hydroxide ion generated at the cathode compartment will associate with a free cation, such as sodium, to preserve charge neutrality and create sodium hydroxide solution. The reaction products of the electrode compartments, such as generated chlorine gas and sodium hydroxide, can be utilized in the process as needed for disinfection purposes, for membrane cleaning and defouling purposes, and for pH adjustment purposes.

Plate-and-frame and spiral wound designs have been used for various types of electrochemical deionization devices including but not limited to electrodialysis (ED) and electrodeionization (EDI) devices. Commercially available ED devices are typically of plate-and-frame design, while EDI devices are available in both plate and frame and spiral configurations.

One or more embodiments relate to devices that may purify fluids electrically that may be contained within a housing, as well as methods of manufacture and use thereof. Liquids or other fluids to be purified enter the purification device and, under the influence of an electric field, are treated to produce an ion-depleted liquid. Species from the entering liquids are collected to produce an ion-concentrated liquid.

In accordance with one or more embodiments, an electrochemical separation system or device may be modular. Each modular unit may generally function as a sub-block of an overall electrochemical separation system. A modular unit may include any desired number of cell pairs. In some embodiments, the number of cell pairs per modular unit may depend on the total number of cell pairs and passes in the separation device. It may also depend on the number of cell pairs that can be thermally bonded and potted in a frame with an acceptable failure rate when tested for cross-leaks and other performance criteria. The number can be based on statistical analysis of the manufacturing process and can be increased as process controls improve. In some non-limiting embodiments, a modular unit may include about 50 cell pairs. Modular units may be individually assembled and quality control tested, such as for leakage, separation performance and pressure drop prior to being incorporated into a larger system. In some embodiments, a cell stack may be mounted in a frame as a modular unit that can be tested independently. A plurality of modular units can then be assembled together to provide an overall intended number of cell pairs in an electrochemical separation device. In some embodiments, an assembly method may generally involve placing a first modular unit on a second modular unit, placing a third modular unit on the first and second modular units, and repeating to obtain a plurality of modular units of a desired number. In some embodiments, the assembly or individual modular units may be inserted into a pressure vessel for operation. Multi-pass or multi-path flow configurations may be possible with the placement of blocking membranes and/or spacers between modular units or within modular units. A modular approach may improve manufacturability in terms of time and cost savings. Modularity may also facilitate system maintenance by allowing for the diagnosis, isolation, removal and replacement of individual modular units. Individual modular units may include manifolding and flow distribution systems to facilitate an electrochemical separation process. Individual modular units may be in fluid communication with one another, as well as with central manifolding and other systems associated with an overall electrochemical separation process.

In accordance with one or more embodiments, the efficiency of electrochemical separation systems may be improved. Current loss is one potential source of inefficiency. In some embodiments, such as those involving a cross-flow design, the potential for current leakage may be addressed. Current efficiency may be defined as the percentage of applied current that is effective in moving ions out of the dilute stream into the concentrate stream. Various sources of current inefficiency may exist in an electrochemical separation system. One potential source of inefficiency may involve current that bypasses the cell pairs by flowing through the dilute and concentrate inlet and outlet manifolds. Open inlet and outlet manifolds may be in direct fluid communication with flow compartments and may reduce pressure drop in each flow path. Part of the electrical current from one electrode to the other may bypass the stack of cell pairs by flowing through the open areas. The bypass current reduces current efficiency and increases energy consumption. Another potential source of inefficiency may involve ions that enter the dilute stream from the concentrate due to imperfect permselectivity of ion exchange membranes. In some embodiments, techniques associated with the sealing and potting of membranes and screens within a device may facilitate reduction of current leakage.

In one or more embodiments, a bypass path through a stack may be manipulated to promote current flow along a direct path through a cell stack so as to improve current efficiency. In some embodiments, an electrochemical separation device may be constructed and arranged such that one or more bypass paths are more tortuous than a direct path through the cell stack. In at least certain embodiments, an electrochemical separation device may be constructed and arranged such that one or more bypass paths present higher resistance than a direct path through the cell stack. In some embodiments involving a modular system, individual modular units may be configured to promote current efficiency. Modular units may be constructed and arranged to provide a current bypass path that will contribute to current efficiency. In non-limiting embodiments, a modular unit may include a manifold system and/or a flow distribution system configured to promote current efficiency. In at least some embodiments, a frame surrounding a cell stack in an electrochemical separation modular unit may be constructed and arranged to provide a predetermined current bypass path. In some embodiments, promoting a multi-pass flow configuration within an electrochemical separation device may facilitate reduction of current leakage. In at least some non-limiting embodiments, blocking membranes or spacers may be inserted between modular units to direct dilute and/or concentrate streams into multiple-pass flow configurations for improved current efficiency. In some embodiments, current efficiency of at least about 60% may be achieved. In other embodiments, a current efficiency of at least about 70% may be achieved. In still other embodiments, a current efficiency of at least about 80% may be achieved. In at least some embodiments, a current efficiency of at least about 85% may be achieved.

In accordance with one or more embodiments, a method for preparing a cell stack for an electrical purification apparatus may comprise forming compartments. A first compartment may be formed by securing ion exchange membranes to one another to provide a first spacer assembly having a first spacer disposed between the ion exchange membranes. For example, a first cation exchange membrane may be secured to a first anion exchange membrane at a first portion of a periphery of the first cation exchange membrane and the first anion exchange membrane to provide a first spacer assembly having a first spacer disposed between the first cation exchange membrane and the first anion exchange membrane.

A second compartment may be formed by securing ion exchange membranes to one another to provide a second spacer assembly having a second spacer disposed between the ion exchange membranes. For example, a second anion exchange membrane may be secured to a second cation exchange membrane at a first portion of a periphery of the second cation exchange membrane and the second anion exchange membrane to provide a second spacer assembly having a second spacer disposed between the second anion exchange membrane and the second cation exchange membrane.

A third compartment may be formed between the first compartment and the second compartment by securing the first spacer assembly to the second spacer assembly, and by positioning a spacer therebetween. For example, the first spacer assembly may be secured to the second spacer assembly at a second portion of the periphery of the first cation exchange membrane and at a portion of the periphery of the second anion exchange membrane to provide a stack assembly having a spacer disposed between the first spacer assembly and the second spacer assembly.

Each of the first compartment and the second compartment may be constructed and arranged to provide a direction of fluid flow that is different from the direction of fluid flow in the third compartment. For example, the fluid flow in the third compartment may be running in a direction of a 0° axis. The fluid flow in the first compartment may be running at 30°, and the fluid flow in the second compartment may be running at the same angle as the first compartment (30°) or at another angle, such as 120°. The method may further comprise securing the assembled cell stack within a housing.

In accordance with one or more embodiments, an electrochemical separation system may include a cross-flow design. A cross-flow design may allow for increased membrane utilization, lower pressure drop and a reduction in external leaks. Additionally, limitations on operating pressure may be reduced by a cross-flow design. In at least some embodiments, the pressure rating of a shell and endcaps may be the only substantial limitations on operating pressure. Automation of manufacturing processes may also be achieved.

In accordance with one or more embodiments, a first fluid flow path and a second fluid flow path may be selected and provided by way of the portions of the peripheries of the ion exchange membranes that are secured to one another. Using the first fluid flow path as a direction running along a 0° axis, the second fluid flow path may run in a direction of any angle greater than zero degrees and less than 360°.

In certain embodiments of the disclosure, the second fluid flow path may run at a 90° angle, or perpendicular to the first fluid flow path. In other embodiments, the second fluid flow path may run at a 180° angle to the first fluid flow path. If additional ion exchange membranes are secured to the cell stack to provide additional compartments, the fluid flow paths in these additional compartments may be the same or different from the first fluid flow path and the second fluid flow path. In certain embodiments, the fluid flow path in each of the compartments alternates between a first fluid flow path and a second fluid flow path. For example, the first fluid flow path in the first compartment may be running in a direction of 0°. The second fluid flow path in the second compartment may be running in a direction of 90°, and the third fluid flow path in the third compartment may be running in a direction of 0°. In certain examples, this may be referred to as cross-flow electrical purification.

In other embodiments, the fluid flow path in each of the compartments alternates sequentially between a first fluid flow path, a second fluid flow path, and a third fluid flow path. For example, the first fluid flow path in the first compartment may be running in a direction of 0°. The second fluid flow path in the second compartment may be running at 30°, and the third fluid flow path in the third compartment may be running at 90°. The fourth fluid flow path in the fourth compartment may be running at 0°. In another embodiment, the first fluid flow path in the first compartment may be running in a direction of 0°. The second fluid flow path in the second compartment may be running at 60°, and the third fluid flow path in the third compartment may be running at 120°. The fourth fluid flow path in the fourth compartment may be running at 0°. In some embodiments, one or more flow paths may be substantially non-radial. In at least some embodiments, one or more flow paths may facilitate achieving a substantially uniform liquid flow velocity profile within the system.

In accordance with one or more embodiments, the flow within a compartment may be adjusted, redistributed, or redirected to provide greater contact of the fluid with the membrane surfaces within the compartment. The compartment may be constructed and arranged to redistribute fluid flow within the compartment. The compartment may have obstructions, projections, protrusions, flanges, or baffles that may provide a structure to redistribute the flow through the compartment, which will be discussed further below. In certain embodiments, the obstructions, projections, protrusions flanges, or baffles may be referred to as a flow redistributor. A flow redistributor may be present in one or more of the compartments of the cell stack.

Each of the compartments in the cell stack for an electrical purification apparatus may be constructed and arranged to provide a predetermined percentage of surface area or membrane utilization for fluid contact. It has been found that greater membrane utilization provides greater efficiencies in the operation of the electrical purification apparatus. Advantages of achieving greater membrane utilization may include lower energy consumption, smaller footprint of the apparatus, less passes through the apparatus, and higher quality product water. In certain embodiments, the membrane utilization that may be achieved is greater than 65%. In other embodiments, the membrane utilization that may be achieved is greater than 75%. In certain other embodiments, the membrane utilization that may be achieved may be greater than 85%. The membrane utilization may be at least in part dependent on the methods used to secure each of the membranes to one another, and the design of the spacer. In order to obtain a predetermined membrane utilization, appropriate securing techniques and components may be selected in order to achieve a reliable and secure seal that allows optimal operation of the electrical purification apparatus, without encountering leakage within the apparatus. In some embodiments, stack production processes may involve thermal bonding techniques to maximize membrane utilization, while maintaining a large surface area of membrane that may be used in the process.

In accordance with one or more embodiments, an electrical purification apparatus comprising a cell stack is provided. The electrical purification apparatus may comprise a first compartment comprising ion exchange membranes and may be constructed and arranged to provide a direct fluid flow in a first direction between the ion exchange membranes. The electrical purification apparatus may also comprise a second compartment comprising ion exchange membranes and may be constructed and arranged to provide a direct fluid flow in a second direction. Each of the first compartment and the second compartment may be constructed and arranged to provide a predetermined percentage of surface area or membrane utilization for fluid contact.

An electrical purification apparatus may comprise a cell stack. The electrical purification apparatus may comprise a first compartment comprising a first cation exchange membrane and a first anion exchange membrane, the first compartment constructed and arranged to provide a direct fluid flow in a first direction between the first cation exchange membrane and the first anion exchange membrane. The apparatus may also comprise a second compartment comprising the first anion exchange membrane and a second cation exchange membrane to provide a direct fluid flow in a second direction between the first anion exchange membrane and the second cation exchange membrane. Each of the first compartment and the second compartment may be constructed and arranged to provide a predetermined membrane utilization, for example, a fluid contact of greater than 85% of the surface area of the first cation exchange membrane, the first anion exchange membrane and the second cation exchange membrane. At least one of the first compartment and the second compartment may comprise a spacer, which may be a blocking spacer.

As discussed above, an electrochemical separation system may include a single cell stack. In other embodiments, the system may be modular or staged in which two or more cell stacks may be present.

In accordance with one or more embodiments, the electrical purification apparatus comprising a cell stack may further comprise a housing enclosing the cell stack, with at least a portion of a periphery of the cell stack secured to the housing. A frame may be positioned between the housing and the cell stack. A flow redistributor may be present in one or more of the compartments of the cell stack. At least one of the compartments may be constructed and arranged to provide flow reversal within the compartment. In systems including a single cell stack, there may be a single frame enclosing the cell stack and secured to the housing. In modular systems, each cell stack may include its own frame to provide a modular unit which may in turn be secured to the housing. Thus, a housing may include a single cell stack or multiple cell stacks with frames optionally facilitating mounting within the housing.

In accordance with one or more embodiments, a housing may include electrodes. Endplates may include the electrodes. In some embodiments, a single cell stack may be positioned between a pair of electrodes. In modular embodiments, two or more modular units each including a cell stack may be positioned between a pair of electrodes.

In some embodiments discussed herein, an assembly including a cell stack (single or modular) mounted between a pair of electrodes may be referred to as an electrochemical treatment module.

In some embodiments of the disclosure, a cell stack for an electrical purification apparatus is provided. The cell stack may provide a plurality of alternating ion depleting and ion concentrating compartments. Each of the ion depleting compartments may have an inlet and an outlet that provides a dilute fluid flow in a first direction. Each of the ion concentrating compartments may have an inlet and an outlet that provides a concentrated fluid flow in a second direction that is different from the first direction. A spacer may be positioned in the cell stack. The spacer may provide structure to and define the compartments and, in certain examples, may assist in directing fluid flow through the compartment. The spacer may be a blocking spacer which may be constructed and arrange to redirect at least one of fluid flow and electrical current through the cell stack. As discussed, the blocking spacer may reduce or prevent electrical current inefficiencies in the electrical purification apparatus.

The electrical purification apparatus may comprise a first electrode adjacent an anion exchange membrane at a first end of the cell stack, and a second electrode adjacent a cathode exchange membrane at a second end of the cell stack. The apparatus may further comprise a blocking spacer positioned in the cell stack and constructed and arranged to redirect at least one of a dilute fluid flow and a concentrate fluid flow through the electrical purification apparatus and to prevent a direct current path between the first electrode and the second electrode. As discussed above, the blocking spacer may be constructed and arranged to reduce electrical current inefficiencies in the electrical purification apparatus.

A blocking spacer may be positioned between a first modular unit and a second modular unit. A flow redistributor may be present in one or more of the compartments of a cell stack. At least one of the compartments may be constructed and arranged to provide flow reversal within the compartment. A bracket assembly may be positioned between the frame and the housing to provide support to the modular unit and to secure the modular unit within the housing.

The fluid flow in the first direction may be a diluting stream and the fluid flow in the second direction may be a concentrating stream. In certain embodiments, the fluid flow in the first direction may be converted to a concentrating stream and the fluid flow in the second direction may be converted to a diluting stream with the use of polarity reversal where the applied electrical field is reversed thus reversing the stream function. Multiple spacer assemblies separated by spacers may be secured together to form a stack of cell pairs, or a membrane cell stack.

The electrical purification apparatus of the present disclosure may further comprise a housing that encloses the cell stack. At least a portion of the periphery of the cell stack may be secured to the housing. A frame or support structure may be positioned between the housing and the cell stack to provide additional support to the cell stack. The frame may also comprise inlet manifolds and outlet manifolds that allow the flow of liquid in and out of the cell stack. The frame and the cell stack together may provide an electrical purification apparatus modular unit. The electrical purification apparatus may further comprise a second modular unit secured within the housing. A spacer, for example, a blocking spacer, may be positioned between the first modular unit and the second modular unit. A first electrode may be positioned at an end of the first modular unit that is opposite an end in communication with the second modular unit. A second electrode may be positioned at an end of the second modular unit that is opposite an end in communication with the first modular unit.

A bracket assembly may be positioned between the frame and the housing of the first modular unit, the second modular unit, or both. The bracket assembly may provide support to the modular units, and provide for a secure attachment to the housing. In one embodiment of the disclosure, the electrical purification apparatus may be assembled by positioning a membrane cell stack into a housing or vessel. Endplates may be provided at each end of the cell stack. Adhesive may be applied to seal at least a portion of the periphery of the cell stack to the inside wall of the housing.

In certain embodiments of the disclosure, an electrical purification apparatus is provided that reduces or prevents inefficiencies resulting from greater electrical power consumption. The electrical purification apparatus of the present disclosure may provide for a multiple pass flow configuration to reduce or prevent current inefficiencies. The multiple pass flow configuration may reduce the bypass of current through the flow manifolds, or leakage of current, by eliminating or reducing the direct current path between the anode and the cathode of the electrical purification apparatus. In certain embodiments of the disclosure the flow within a compartment may be adjusted, redistributed, or redirected to provide greater contact of the fluid with the membrane surfaces within the compartment. The compartment may be constructed and arranged to redistribute fluid flow within the compartment. The compartment may have obstructions, projections, protrusions, flanges, or baffles that may provide a structure to redistribute the flow through the compartment. The obstructions, projections, protrusions, flanges, or baffles may be formed as part of ion exchange membranes, the spacer, or may be an additional separate structure that is provided within the compartment. In at least one embodiment, a membrane or blocking spacer may be substantially non-conductive so as to impact current flow within the system.

In accordance with one or more embodiments, a cell stack as discussed herein may have any desired number of ion exchange membranes, cell pairs or flow compartments. In some embodiments, an electrochemical separation system may include a single cell stack. In other embodiments, such as in modular embodiments, and electrochemical separation system may include two or more cell stacks. In some embodiments, each cell stack may be included in a separate modular unit as discussed herein. Modularity may offer design flexibility and ease of manufacturability.

In accordance with one or more embodiments, an electrochemical separation system may include a first electrode, a second electrode, a first electrochemical separation modular unit having a first cell stack defining a plurality of alternating depleting compartments and concentrating compartments supported by a first frame, the first electrochemical separation modular unit positioned between the first electrode and the second electrode, and a second electrochemical separation modular unit, in cooperation with the first electrochemical separation modular unit, having a second cell stack defining a plurality of alternating depleting compartments and concentrating compartments supported by a second frame, the second electrochemical separation modular unit positioned between the first electrochemical separation modular unit and the second electrode. The first cell stack may be surrounded by the first frame, and the second cell stack may be surrounded by the second frame. In some embodiments, the first and second electrochemical separation modular units are arranged fluidly in series or in parallel. The first and second electrochemical separation modular units may each be of unitary construction or may themselves be constructed of sub-blocks. The first and second electrochemical separation modular units may be removable. In some embodiments, a blocking spacer may be positioned between the first and second electrochemical separation modular units. As discussed, each of the frames may include a manifold system and/or a flow distribution system. The first and second electrochemical separation modular units may be mounted in a vessel, such as with a bracket assembly. The system may include two, three, four or more modular units depending on an intended application and various design elements. A source of water to be treated may be fluidly connected to an inlet of the vessel. The depleting compartments and concentrating compartments may each have an inlet in fluid communication with the inlet of the vessel.

In accordance with one or more embodiments, one, two or more modular units may be inserted between a first electrode and a second electrode. In some embodiments, two modular units may be substantially adjacent one another within the system. In other embodiments, a blocking spacer may be positioned between two adjacent modular units. In at least certain embodiments, a modular unit in a separation system may not have a dedicated set of electrodes. Instead, multiple modular units may be positioned between a single pair of electrodes. Alternatively, each modular unit may include its own dedicated pair of electrodes.

In accordance with one or more embodiments, an electrochemical separation modular unit may comprise a cell stack defining a plurality of alternating depleting compartments and concentrating compartments, and a support system. The support system may be configured to maintain vertical alignment of the cell stack. The support system may be a frame in some embodiments. A frame may at least partially surround the cell stack. In other embodiments, the frame may substantially surround the cell stack. In some embodiments, a frame may include a manifold system configured to facilitate fluid flow through the cell stack. A manifold system may deliver process liquid from a central system manifold to an individual modular unit that it services. A manifold system may include an inlet manifold and an outlet manifold. A manifold system may comprise an inlet manifold in fluid communication with an inlet of each depleting compartment and with an inlet of each concentrating compartment. The manifold system may further comprise an outlet manifold in fluid communication with an outlet of each depleting compartment and with an outlet of each concentrating compartment. The manifold system may be configured to deliver treated liquid downstream via the outlet manifold. At least a portion of the manifold system may be integral to the frame or in a structure separate from the frame. In at least some embodiments, the manifold system may be constructed and arranged to prevent mixing of dilute and concentrate streams in a modular unit. The manifold system may fluidly isolate and keep separated outlets of dilute and concentrate compartments associated with a stack.

In some embodiments, a support system such as a frame may include a flow distribution system. The flow distribution system may be a part of the manifold system or a separate system. The flow distribution system may be in fluid communication with the manifold system and may be configured to promote uniform flow distribution to a cell stack. The flow distribution system may be in fluid communication with an inlet of each depleting compartment and with an inlet of each concentrating compartment. In some embodiments, at least a portion of the flow distribution system may be integral to the frame. In other embodiments, at least a portion of the flow distribution system may engage with the frame. In some embodiments, at least a portion of the flow distribution system comprises an insert that is removably receivable by the frame. This may be for ease of manufacturability of one or more features of the flow distribution system. One or more features of the manifold and/or flow distribution system may be integrated into the frame such as via an insert structure. In some embodiments, a flow distribution system may engage with each inlet and outlet of the cell stack. In some embodiments, a frame may include an insert associated with at least one side of the cell stack. In at least some embodiments, a frame may include an insert associated with each side of the cell stack. For example, a rectangular cell stack may include four inserts. The manifold system and/or flow distribution system or component thereof may be associated with each side of a cell stack. Manifolding and flow distributors may be configured to facilitate uniform flow as well as to prevent current loss.

This invention is not limited in use to electrodialysis equipment. Other electrochemical deionization device such as electrodeionization (EDI) or continuous electrodeionization (CEDI) can also be constructed using a cross flow configuration. The systems may be modular as described herein. Multiple passes may be achieved. In cross-flow ED and EDI devices the diluting and concentrating streams generally flow in directions perpendicular to each other. Potential applications include desalination of seawater, brackish water and brines from oil and gas production.

In accordance with one or more embodiments, a water treatment system is provided. In various embodiments, the water treatment system may be an electrochemical separation system, as described and characterized above. The water treatment system according to the invention includes a feed inlet that is fluidly connected to a source of water to be treated. Non-limiting examples of suitable sources of water to be treated include sources of potable water, for example, municipal water or well water, sources of non-potable water, for example, brackish or saltwater, pre-treated semi-pure water, and any combination thereof. The water treatment system includes a first electrochemical separation module that is in fluid communication with the feed inlet. The first electrochemical separation module may include a single cell stack or two or more modular units each including a cell stack as discussed above. The first electrochemical separation module may include at least one ion exchange membrane. The at least one ion exchange membrane has a first set of performance characteristics. The first set of performance characteristics may generally characterize the membrane according to various parameters. The first set of performance characteristics relates to water loss, electrical resistance, and permselectivity of the at least one ion exchange membrane.

As used herein, the term "water loss" in reference to an ion exchange membrane may refer to at least one of electro-osmotic water loss and osmotic water loss. Electro-osmotic water loss may generally refer to water loss through the membrane when water molecules are transported along with ions as they pass through the membrane due to an applied electric field. Osmotic water loss may generally refer to water loss via diffusion due to the difference in ion concentrations on either side of a membrane wall. A water loss coefficient may be used to characterize a membrane by quantifying an associated degree of water loss.

As used herein, the terms "electrical resistance" and "area resistivity" may be used interchangeably and may generally refer to the resistance of a membrane material to the flow of electrical current. In electrochemical separation processes, it may be desirable to use ion exchange membranes with low electrical resistance, since they may increase energy efficiency and reduce ohmic loss during operation.

As used herein, the term "permselectivity" may refer to the ability of an ion exchange membrane to be permeable to one chemical species but impermeable with respect to another chemical species. For example, in certain instances the ion exchange membrane may be permeable to counter-ions, but impermeable to co-ions. In at least some embodiments, it may be desirable to have high permselectivity for efficiency.

There are other parameters recognized by those skilled in the art that may define the performance characteristics of the first electrochemical separation module. The water treatment system according to the invention further includes a second electrochemical separation module fluidly connected to the first electrochemical separation module. The first and second electrochemical separation modules are fluidly connected in series. The second electrochemical separation module may include a single cell stack or two or more modular units each including a cell stack as discussed above. The second electrochemical separation module includes at least one ion exchange membrane. The at least one ion exchange membrane has a second set of performance characteristics that is different than the first set of performance characteristics. The first and second sets of performance characteristics differ based on more than two parameters.

The water treatment system further includes a product outlet that is fluidly connected downstream of the second electrochemical separation module. The product outlet may provide water suitable for one or more uses directly, or may be processed further. According to at least one embodiment, the water treatment system may suitable for use in a desalination process. For example, the water treatment system may be used in oil field flooding applications to improve recovery on off-shore oil platforms. In various embodiments, the water treatment system may produce potable water, or water that is suitable in any of a number of other uses, such as crop irrigation or industrial applications. A water treatment system that is used for purposes of irrigation may use a different set of ion exchange membranes than a water treatment system that is used for producing potable water or one used for oil field flooding. Furthermore, within a single system for an intended purpose, various ion exchange membranes exhibiting different performance characteristics may be selected to enhance or provide optimized processing capability.

According to certain embodiments, the first and second electrochemical separation modules may be electrodialysis devices. In certain other embodiments, the first and second electrochemical separation modules may be electrodeionization devices. The second electrochemical separation module includes at least one ion exchange membrane having a second set of performance characteristics that is different than the first set of performance characteristics of the first electrochemical separation module. The performance characteristics related to water loss, electrical resistance, and permselectivity are different between the ion exchange membranes of the first and second electrochemical separation modules. The at least one ion exchange membrane of the first electrochemical separation module and at least one ion exchange membrane of the second separation module differ in terms of more than two performance characteristics.

The ion exchange membranes of the first and second electrochemical separation modules may be anion exchange membranes, cation exchange membranes, or a combination thereof. For example, in some embodiments, at least one ion exchange membrane of the first and second electrochemical separation modules may be an anion exchange membrane. In other embodiments, at least one ion exchange membrane of the first and second electrochemical separation modules may be a cation exchange membrane.

In accordance with one or more embodiments, the water treatment system may further include a third electrochemical separation module. The third electrochemical separation module may be fluidly connected between the first and second electrochemical separation modules, and may include at least one ion exchange membrane having a third set of performance characteristics that is different than the first and second performance characteristics associated with the ion exchange membranes of the first and second electrochemical separation modules. In other embodiments, the third electrochemical separation module may include at least one ion exchange membrane having the same set of performance characteristics as the ion exchange membranes of first or second electrochemical separation modules.

The performance characteristics of the ion exchange membranes may be controlled during the manufacturing process. For example, a membrane may be constructed to exhibit low water loss, high permselectivity, and high electrical resistance. In another example, a membrane may be constructed to exhibit low electrical resistivity, low permselectivity, and high water loss. Membranes with any combination of properties and parameters may be constructed.

When arranged in series, performance characteristics of membranes associated with the first and second electrochemical separation modules are selected to optimize energy efficiency or provide improvements in one or more other process performance parameters. The first electrochemical separation module exhibits a lower electrical resistivity than the second electrochemical separation module. The first electrochemical separation module exhibits higher water loss than the second electrochemical separation module.

In accordance with one or more embodiments, the performance characteristics of membranes positioned at various stages within a treatment system may be strategically selected. Selection may be based, at least in part, on properties of a process stream to be treated with the membranes at a given stage, the degree of separation to be performed by the membranes at that stage, as well as the position of the membranes at that stage within the overall treatment system. For example, the total dissolved solids (TDS) of inlet and/or outlet process streams associated with an electrochemical separation module may impact the selection of membranes and their performance characteristics to be used therein. It may be desirable for efficiency purposes to have membranes exhibiting a first set of performance characteristics to be positioned upstream within the system, and membranes exhibiting a second set of performance characteristics to be positioned downstream within the system. Other factors and considerations may influence membrane selection for various stages.

In some embodiments, it may be advantageous to have different ion exchange membranes exhibiting a range of performance characteristics within a single system. The ion exchange membranes may be arranged in parallel or in series. The membranes may provide a multi-stage arrangement for a particular application, such as a desalination process. Membranes having different performance characteristics may be positioned within a single modular unit. In other embodiments, a single modular unit may include membranes having a single set of performance characteristics. In turn, variation in performance characteristics may exist among modular units of a treatment system wherein modular units may be characterized by different sets of performance characteristics.

In some embodiments, a treatment system may include a single cell stack bound between a pair of electrodes in a housing. The single cell stack may include membranes all having the same set of performance characteristics or zones with membranes having different sets of performance characteristics. In some embodiments, this may be referred to as a first treatment module. A second treatment module including a single cell stack bound between a pair of electrodes in a housing may be fluidly connected downstream of the first treatment module. The second treatment module may include membranes have a set of performance characteristics that differs from the performance characteristics of the membranes in the first treatment module. At least one performance parameter may differ. The second treatment module may include all membranes having the same set of performance characteristics or different zones therein.

In other embodiments, a treatment system may be modular such that two or more modular units are mounted between a pair of electrodes within a single housing. Each modular unit may include a cell stack surrounded by a frame as discussed above. The cell stack of each modular unit may have a set of performance characteristics. Different modular units may have membranes having different performance characteristics.

Thus, overall treatment systems may be modular in that they include two or more treatment modules each having its own housing and electrode pair or modular in that two or more modular units may be positioned within a single housing between a single electrode pair. Hybrid systems are within the scope of this disclosure in which modules which themselves are modular are arranged in series or in parallel. Various modules and/or modular units may include membranes having different sets of performance characteristics. Some modules and/or modular units may be characterized by the same set of performance characteristics within a treatment system. Some modules and/or modular units may differ in terms of one or more parameters as described herein.

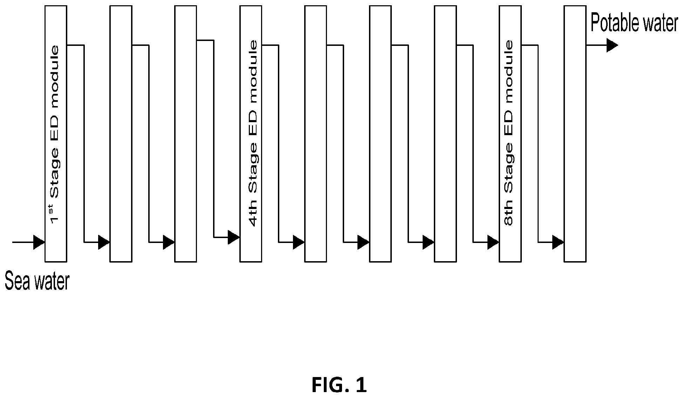

A specific non-limiting example of a multi-stage desalination process in accordance with one or more embodiments is illustrated in FIG. 1. As shown, an electrodialysis system with two or more stages may be used to produce potable water having a total dissolved solids (TDS) content of less than about 500 ppm from seawater where the TDS is typically about 35,000 ppm. The TDS of seawater may range from about 10,000 ppm to about 100,000 ppm. Each stage of the ED system illustrated in FIG. 1 removes a portion of the TDS content, and there are nine stages in total arranged in series. Feed water with a TDS of 35,000 ppm of typical seawater is fed into the first stage of the process, and the first stage or first few stages may remove a large portion of the salt. This initial part of the process may involve one or more ion exchange membrane having a first set of performance characteristics. For example, it may be desirable to use ion exchange membranes with at least one of a low electrical resistivity, low permselectivity, and high water loss in the first stage or first few stages of the process. A middle stage of the process, such as the fourth stage fed by 20,000 ppm water, may involve ion exchange membranes having a different set of performance characteristics than the first stage. Further downstream stages of the process may include ion exchange membranes with a different set of performance characteristics than the first stage and middle stages, such as the eighth stage of the process which may be fed with 4000 ppm water. For example, in the downstream or terminal stages of the process it may be desirable to use ion exchange membranes with at least one of a high electrical resistivity, high permselectivity, and low water loss. The performance characteristics of the ion exchange membranes used in each of the stages may all be different, or two or more stages may include ion exchange membranes with one or more of the same performance characteristics. Various combinations are within the scope of this disclosure.

A multi-stage approach to water treatment using ion exchange membranes having different properties and characteristics at various stages may enhance one or more performance parameters associated with a water treatment process. Competing factors and tradeoffs between membranes positioned at various stages may be weighed and properties strategically assigned to improve the overall efficiency of a treatment process. For example, osmotic water loss in a downstream stage of a multi-stage process may be a much bigger concern or efficiency factor than in a first stage because the concentration difference between neighboring depletion and concentrating compartments may be quite high downstream. This may lead to process inefficiency, since water that has already been treated and partially purified may be lost to the concentrating compartment. By using ion exchange membranes characterized by a lower water loss coefficient in the later stages of the process, power consumption may be reduced. An ion exchange membrane exhibiting low water loss may also have a high electrical resistivity. However, the penalty of a higher electrical resistance may be minor when compared to the gain of the lower water loss in downstream stages. In early stages, the concentration difference between dilute and concentrate compartments will be relatively low. As a result, ion exchange membranes with low electrical resistivity may be desired. At the same time, if the early stage membranes have a high water loss coefficient, water loss will not be significant due to the low difference in concentration. In stages where, for example, 5000 ppm of salt is being removed, electrical resistivity may not be as important. Energy consumption and cost may therefore be optimized by strategically positioning membranes having different sets of performance characteristics at different stages within a treatment system. Cation and anion exchange membranes may both be optimized in accordance with one or more embodiments. A method of treating water involves introducing water having a first concentration of dissolved solids to an inlet of a first electrochemical separation module to form a process stream having a second concentration of dissolved solids, the first electrochemical separation module including at least one ion exchange membrane having a first set of performance characteristics, introducing the process stream having the second concentration of dissolved solids to a second electrochemical separation module to form treated water, the second electrochemical separation module including at least one ion exchange membrane having a second set of performance characteristics that is different than the first set of performance characteristics, and collecting the treated water at an outlet of the second electrochemical separation module.

In accordance with one or more embodiments, a method of facilitating water treatment may involve providing a first electrochemical separation module including at least one ion exchange membrane having a first set of performance characteristics, providing a second electrochemical separation module including at least one ion exchange membrane having a second set of performance characteristics that is different than the first set of performance characteristics, and providing instructions to treat water with the first electrochemical separation module to produce a process stream having a predetermined concentration of dissolved solids, and to treat the process stream having the predetermined concentration of dissolved solids with the second electrochemical separation module.

In accordance with one or more embodiments, the concept of using a combination of membranes with different features relating to ion transport, such as resistance, perselectivity and/or water loss, at different concentration gradients may be extended to the use of a combination of membranes having different physical natures and inherent properties. For example, during boron or silica removal, it is well known that the removal rate is enhanced at low dilute concentrations. The selective membranes that enable an accelerated ion removal are typically more resistive. Therefore, it may not be economical to use special selective membranes at earlier stages. The combination of membranes having different natures and properties may result in optimization of operation, such as energy consumption.

In accordance with one or more embodiments, various stages of desalting may be divided into separate modules. Some embodiments are presented accordingly for illustration. In other embodiments, various stages of desalting may be built in a single module. The combination of different membranes at different desalting stages may generally take advantage of the different natures and properties of the membranes for use at different concentration gradients.

One or more embodiments may be applied to any ED or CEDI process over any TDS range by combining membranes differing in features not limited to the properties of resistance, permselectivity and water loss to obtain improved operational efficiency.

The function and advantages of these and other embodiments will be more fully understood from the following examples. The examples are intended to be illustrative in nature and are not to be considered as limiting the scope of the embodiments discussed herein.

### EXAMPLE 1

Desalination systems and methods may be staged in accordance with one or more embodiments discussed herein. A water treatment system, such as an ED system, comprising two or more stages may be used to produce potable water. For example, a first stage of a multi-stage desalination system may remove about 10,000 ppm from feed water having a TDS of about 35,000 ppm so that effluent from the first stage is at about 25,000 ppm. A subsequent stage downstream of the first stage may receive a 10,000 ppm feed as effluent from one or more intermediate stages and may remove about 5000 ppm from it so that effluent from the subsequent stage is at about 5000 ppm.

At least one performance characteristic of the ion exchange membranes used in the first stage and the subsequent stage may be different. In the first stage, where 10,000 ppm is removed from the feed water, the concentration difference between the depleting (dilute) and concentrating compartments of the ED module may be low. As a result, an ion exchange membrane with low electrical resistivity may be desired. At the same time, in terms of performance characteristics, this membrane may have high water loss since the associated water loss associated with this stage in the process is not significant due to the low concentration difference between the two compartments. The concentration difference corresponding to the osmotic pressure amplitude is the driving force of water loss. In addition, the more dilute the stream is where ions move from, the more water will be dragged through during the ion transport via electroosmosis. Conversely, in the subsequent stage, where 5000 ppm is removed, the concentration difference between the depleting and concentrating compartments may be high, meaning that electrical resistivity in this stage of the process may not be as important as in the first stage. As a result, an ion exchange membrane with high electrical resistivity may be desired. In terms of other performance characteristics, this membrane may be desired to have low water loss, since the water loss associated with this stage is more significant. The comparison between the two stages in this prophetic desalination process is illustrated in Table 1.

**Table 1 -Characteristics of Compartments in Multi-Stage System**

| **Stage** | **Dilute Feed** | **Conc. Feed** | **Dilute Out** | **Conc. Out** | **Cone. Out/ Dilute Out** |
|---|---|---|---|---|---|
| First | 35000 ppm | 35000 ppm | 25000 ppm | 45000 ppm | 1.8 |
| Subsequent | 10000 ppm | 35000 ppm | 5000 ppm | 40000 ppm | 8 |

As Table 1 illustrates, in the first stage of the process, the ratio between the TDS of the effluent from the concentration compartment and the depletion compartment is a value of 1.8. This same ratio for the subsequent stage of the process has a value of 8. Osmotic water loss in the subsequent stage is a more significant factor than in the first stage, since the concentration difference between the neighboring depletion and concentrating compartments is high and water that has been treated and partially purified may be lost to the concentrating compartment. Therefore, to maximize energy efficiency, it is desirable to use a membrane exhibiting low water loss but high electrical resistivity and high permselectivity in later stages of the multi-stage desalination process, and to use a membrane exhibiting high water loss, but low electrical resistivity and low permselectivity in the initial stages of the process. Power consumption may be reduced by lowering the water loss in later stages of the multi-stage system.

### EXAMPLE 2

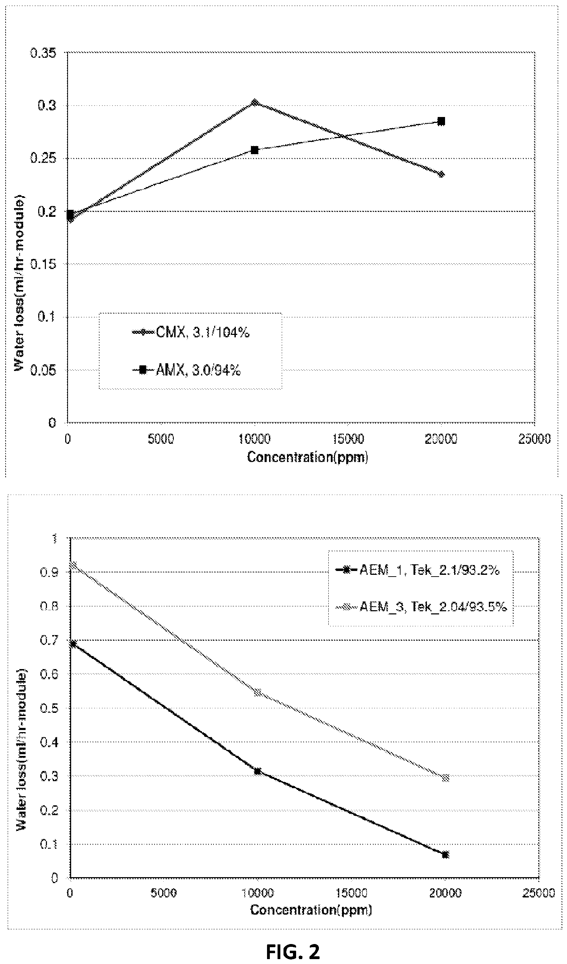

FIG. 2 illustrates the results from testing osmotic water loss from two different types of ion exchange membranes. The graph on the top illustrates osmotic water loss for a membrane exhibiting low water loss and high electrical resistance with a value of about 3 Ω-cm². In contrast, the graph on the bottom illustrates the osmotic water loss for a membrane exhibiting low electrical resistance with a value of about 1 Ω-cm², but higher water loss than the membrane used for the results depicted on the left graph. As discussed above, a membrane with characteristics similar to those illustrated in the graph on the bottom may be suitable for use in one or more initial stages of a multi-stage desalination process, while a membrane with characteristics similar to those illustrated in the graph on the top may be suitable for use in one or more downstream stages of the process. Both anion and cation exchange membranes can have the desired properties.

### EXAMPLE 3

Table 2 presents water loss and membrane intrinsic data for various ion exchange membranes. The percentage water loss data was collected by a 10 cell pair lab module with an electrode area of 50 cm² during seawater desalination from about 35000 ppm down to about 500-1000 ppm. Also listed are the intrinsic properties of the membranes.

**Table 2- Water Loss Rate during Seawater Desalination using Specific Ion Exchange Membrane**

| **Membrane Pairs** | | **Resistivity(Ω/cm²)** | **Thickness (µm)** | **Permselectivity** | **Water loss (%)** |
|---|---|---|---|---|---|
| **1** | CMX/AMX | 3.0/2.7 | 130/130 | 1.05/0.95 | 12% |
| **2** | SWT Gen2 CEM/AEM | 1.89/0.92 | 50/50 | 1.03/0.935 | 20% |
| **3** | SWT Gen 3 CEM/AEM | 1.40/0.65 | 20/20 | 1.04/0.94 | 25% |
| **4** | Fuji AEM/CEM | 2.0-3.0/2.0-3.0 | 180/180 | 1.02/0.91 | 35% |

As is shown in Table 2, the water loss over the entire typical sea water desalination process is largely dependent on the permselectivity of the ion exchange membranes. For the membranes studied, the water loss range was from about 12%-35%. However, the water loss rate of membranes may be controllable during manufacture via various approaches. For example, water loss properties may be manipulated by adding more cross-linking monomer, using a hydrophobic monomer, or adding non ionic monomers. A wide water loss value range of about 5% to about 50% may be achievable. This may correspond to a resistivity and permselectivity value range of about 0.2 Ω/cm² to about 10 Ω/cm². In some embodiments, it may be desirable to use membrane #4 or #3 for a first stage partial desalination, typically with a TDS from about 35000 ppm down to about 20000 ppm. It may then be desirable to use membrane #3 or #2 for a downstream second stage partial desalination, typically with a TDS of about 20000 ppm down to about 5000 ppm. Finally, it may be desirable to use a #1 membrane further downstream in a third stage desalination, typically for the TDS range of about 5000 ppm down to about 500 ppm.

It is to be appreciated that embodiments of the methods and apparatuses discussed herein are not limited in application to the details of construction and the arrangement of components set forth in the description or illustrated in the accompanying drawings. The methods and apparatuses are capable of implementation in other embodiments and of being practiced or of being carried out in various ways. Examples of specific implementations are provided herein for illustrative purposes only and are not intended to be limiting. In particular, acts, elements and features discussed in connection with any one or more embodiments are not intended to be excluded from a similar role in any other embodiment.

Having described above several aspects of at least one embodiment, it is to be appreciated that various alterations, modifications, and improvements will readily occur to those skilled in the art. Accordingly, the foregoing description and drawings are by way of example only.

## Claims

1. A water treatment system, comprising:
a feed inlet fluidly connected to a source of water to be treated;
a first electrochemical separation module in fluid communication with the feed inlet, the first electrochemical separation module including at least one ion exchange membrane having a first set of performance characteristics;
a second electrochemical separation module fluidly connected to a diluted stream from the first electrochemical separation module, the second electrochemical separation module including a least one ion exchange membrane having a second set of performance characteristics that is different than the first set of performance characteristics; and
a product outlet fluidly connected to a diluted stream from the second electrochemical separation module, wherein the at least one ion exchange membrane of the first electrochemical separation module has a lower electrical resistance, a lower permselectivity, and a higher water loss coefficient than the at least one ion exchange membrane of the second electrochemical separation module.

2. The system of claim 1, wherein the at least one ion exchange membrane of the first electrochemical separation module having the first set of performance characteristics is at least one anion exchange membrane, and wherein the at least one ion exchange membrane of the second electrochemical separation module having the second set of performance characteristics is at least one anion exchange membrane.

3. The system of claim 1, wherein the at least one ion exchange membrane of the first electrochemical separation module having the first set of performance characteristics is at least one cation exchange membrane, and wherein the at least one ion exchange membrane of the second electrochemical separation module having the second set of performance characteristics is at least one cation exchange membrane.

4. The system of claim 1, wherein the first and second electrochemical separation modules are electrodialysis devices.

5. The system of claim 1, wherein the first and second electrochemical separation modules are electrodeionization devices.

6. The system of claim 1, further comprising a third electrochemical separation module fluidly connected between the first and second electrochemical separation modules, the third electrochemical separation module including at least one ion exchange membrane having a third set of performance characteristics that is different than the first and second sets of performance characteristics.

7. A method of treating water, comprising:
introducing water having a first concentration of dissolved solids to an inlet of a first electrochemical separation module of the water treatment system of any of claims 1-4 to form a process stream having a second concentration of dissolved solids, the first electrochemical separation module including at least one ion exchange membrane having a first set of performance characteristics;
introducing the process stream having the second concentration of dissolved solids to a second electrochemical separation module of said water treatment system to form treated water, the second electrochemical separation module including at least one ion exchange membrane having a second set of performance characteristics that is different than the first set of performance characteristics; and
collecting the treated water at an outlet of the second electrochemical separation module.

## Patentansprüche

1. Ein Wasseraufbereitungssystem, beinhaltend:
einen Speiseeinlass, der mit einer Quelle von aufzubereitendem Wasser fluidisch verbunden ist;
ein erstes Modul zur elektrochemischen Trennung in Fluidkommunikation mit dem Speiseeinlass, wobei das erste Modul zur elektrochemischen Trennung mindestens eine lonenaustauschmembran mit einem ersten Satz Leistungseigenschaften umfasst;
ein zweites Modul zur elektrochemischen Trennung, das mit einem verdünnten Strom aus dem ersten Modul zur elektrochemischen Trennung fluidisch verbunden ist, wobei das zweite Modul zur elektrochemischen Trennung mindestens eine lonenaustauschmembran mit einem zweiten Satz Leistungseigenschaften, der sich von dem ersten Satz Leistungseigenschaften unterscheidet, umfasst; und
einen Produktauslass, der mit einem verdünnten Strom aus dem zweiten Modul zur elektrochemischen Trennung fluidisch verbunden ist, wobei die mindestens eine lonenaustauschmembran des ersten Moduls zur elektrochemischen Trennung einen geringeren elektrischen Widerstand, eine geringere Permselektivität und einen höheren Wasserverlustkoeffizienten als die mindestens eine lonenaustauschmembran des zweiten Moduls zur elektrochemischen Trennung aufweist.

2. System gemäß Anspruch 1, wobei die mindestens eine lonenaustauschmembran des ersten Moduls zur elektrochemischen Trennung mit dem ersten Satz Leistungseigenschaften mindestens eine Anionenaustauschmembran ist und wobei die mindestens eine lonenaustauschmembran des zweiten Moduls zur elektrochemischen Trennung mit dem zweiten Satz Leistungseigenschaften mindestens eine Anionenaustauschmembran ist.

3. System gemäß Anspruch 1, wobei die mindestens eine lonenaustauschmembran des ersten Moduls zur elektrochemischen Trennung mit dem ersten Satz Leistungseigenschaften mindestens eine Kationenaustauschmembran ist und wobei die mindestens eine lonenaustauschmembran des zweiten Moduls zur elektrochemischen Trennung mit dem zweiten Satz Leistungseigenschaften mindestens eine Kationenaustauschmembran ist.

4. System gemäß Anspruch 1, wobei das erste und das zweite Modul zur elektrochemischen Trennung Elektrodialysevorrichtungen sind.

5. System gemäß Anspruch 1, wobei das erste und das zweite Modul zur elektrochemischen Trennung Elektrodeionisationsvorrichtungen sind.

6. System gemäß Anspruch 1, ferner beinhaltend ein drittes Modul zur elektrochemischen Trennung, das zwischen dem ersten und dem zweiten Modul zur elektrochemischen Trennung fluidisch verbunden ist, wobei das dritte Modul zur elektrochemischen Trennung mindestens eine lonenaustauschmembran mit einem dritten Satz Leistungseigenschaften, der sich von dem ersten und dem zweiten Satz Leistungseigenschaften unterscheidet, umfasst.

7. Ein Verfahren zur Aufbereitung von Wasser, beinhaltend:
Zuführen von Wasser mit einer ersten Konzentration gelöster Feststoffe zu einem Einlass eines ersten Moduls zur elektrochemischen Trennung des Wasseraufbereitungssystems gemäß einem der Ansprüche 1-4 zum Bilden eines Prozessstroms mit einer zweiten Konzentration gelöster Feststoffe, wobei das erste Modul zur elektrochemischen Trennung mindestens eine lonenaustauschmembran mit einem ersten Satz Leistungseigenschaften umfasst;
Zuführen des Prozessstroms mit der zweiten Konzentration gelöster Feststoffe zu einem zweiten Modul zur elektrochemischen Trennung des Wasseraufbereitungssystems zum Bilden von aufbereitetem Wasser, wobei das zweite Modul zur elektrochemischen Trennung mindestens eine lonenaustauschmembran mit einem zweiten Satz Leistungseigenschaften, der sich von dem ersten Satz Leistungseigenschaften unterscheidet, umfasst; und
Sammeln des aufbereiteten Wassers an einem Auslass des zweiten Moduls zur elektrochemischen Trennung.

## Revendications

1. Un système de traitement de l'eau, comprenant :
une entrée d'alimentation fluidiquement raccordée à une source d'eau devant être traitée ;
un premier module de séparation électrochimique en communication fluidique avec l'entrée d'alimentation, le premier module de séparation électrochimique incluant au moins une membrane échangeuse d'ions ayant un premier ensemble de caractéristiques de fonctionnement ;
un deuxième module de séparation électrochimique fluidiquement raccordé à un flux dilué provenant du premier module de séparation électrochimique, le deuxième module de séparation électrochimique incluant au moins une membrane échangeuse d'ions ayant un deuxième ensemble de caractéristiques de fonctionnement qui est différent du premier ensemble de caractéristiques de fonctionnement ; et
une sortie de produit fluidiquement raccordée à un flux dilué provenant du deuxième module de séparation électrochimique, l'au moins une membrane échangeuse d'ions du premier module de séparation électrochimique ayant une résistance électrique plus faible, une perméabilité sélective plus faible, et un coefficient de perte d'eau plus élevé que l'au moins une membrane échangeuse d'ions du deuxième module de séparation électrochimique.

2. Le système de la revendication 1, dans lequel l'au moins une membrane échangeuse d'ions du premier module de séparation électrochimique ayant le premier ensemble de caractéristiques de fonctionnement est au moins une membrane échangeuse d'anions, et dans lequel l'au moins une membrane échangeuse d'ions du deuxième module de séparation électrochimique ayant le deuxième ensemble de caractéristiques de fonctionnement est au moins une membrane échangeuse d'anions.

3. Le système de la revendication 1, dans lequel l'au moins une membrane échangeuse d'ions du premier module de séparation électrochimique ayant le premier ensemble de caractéristiques de fonctionnement est au moins une membrane échangeuse de cations, et dans lequel l'au moins une membrane échangeuse d'ions du deuxième module de séparation électrochimique ayant le deuxième ensemble de caractéristiques de fonctionnement est au moins une membrane échangeuse de cations.

4. Le système de la revendication 1, dans lequel les premier et deuxième modules de séparation électrochimique sont des dispositifs d'électrodialyse.

5. Le système de la revendication 1, dans lequel les premier et deuxième modules de séparation électrochimique sont des dispositifs d'électrodésionisation.

6. Le système de la revendication 1, comprenant en outre un troisième module de séparation électrochimique fluidiquement raccordé entre les premier et deuxième modules de séparation électrochimique, le troisième module de séparation électrochimique incluant au moins une membrane échangeuse d'ions ayant un troisième ensemble de caractéristiques de fonctionnement qui est différent des premier et deuxième ensembles de caractéristiques de fonctionnement.

7. Un procédé pour traiter de l'eau, comprenant :
l'introduction d'eau ayant une première concentration de solides dissous jusqu'à une entrée d'un premier module de séparation électrochimique du système de traitement de l'eau de n'importe lesquelles des revendications 1 à 4 afin de former un flux de traitement ayant une deuxième concentration de solides dissous, le premier module de séparation électrochimique incluant au moins une membrane échangeuse d'ions ayant un premier ensemble de caractéristiques de fonctionnement ;
l'introduction du flux de traitement ayant la deuxième concentration de solides dissous jusqu'à un deuxième module de séparation électrochimique dudit système de traitement de l'eau afin de former de l'eau traitée, le deuxième module de séparation électrochimique incluant au moins une membrane échangeuse d'ions ayant un deuxième ensemble de caractéristiques de fonctionnement qui est différent du premier ensemble de caractéristiques de fonctionnement ; et
le recueil de l'eau traitée au niveau d'une sortie du deuxième module de séparation électrochimique.
